Europäisches Patentamt

European Patent Office

Office européen des brevets

(19)

(11) **EP 0 702 784 B1**

(12) **EUROPÄISCHE PATENTSCHRIFT**

(45) Veröffentlichungstag und Bekanntmachung des Hinweises auf die Patenterteilung:
**18.03.1998  Patentblatt 1998/12**

(21) Anmeldenummer: **94915026.2**

(22) Anmeldetag: **13.05.1994**

(51) Int Cl.[6]: **G01L 19/04**

(86) Internationale Anmeldenummer:
**PCT/DE94/00550**

(87) Internationale Veröffentlichungsnummer:
**WO 94/29687 (22.12.1994 Gazette 1994/28)**

(54) **DRUCKGEBER ZUR DRUCKERFASSUNG IM BRENNRAUM VON BRENNKRAFTMASCHINEN**

PRESSURE TRANSDUCER FOR THE DETERMINATION OF THE PRESSURE IN COMBUSTION CHAMBERS OF INTERNAL COMBUSTION ENGINES

CAPTEUR DE PRESSION DETECTANT LA PRESSION A L'INTERIEUR DE LA CHAMBRE DE COMBUSTION DE MOTEURS A COMBUSTION INTERNE

(84) Benannte Vertragsstaaten:
**DE FR GB IT SE**

(30) Priorität: **09.06.1993  DE 4319197**

(43) Veröffentlichungstag der Anmeldung:
**27.03.1996  Patentblatt 1996/13**

(73) Patentinhaber: **ROBERT BOSCH GMBH**
**70442 Stuttgart (DE)**

(72) Erfinder:
• **HERDEN, Werner**
  **D-70839 Gerlingen (DE)**
• **KUESELL, Matthias**
  **D-70806 Kornwestheim (DE)**
• **PHILIPPI, Andreas**
  **D-71563 Afalterbach (DE)**

(56) Entgegenhaltungen:
**DE-A- 3 026 617**          **DE-A- 4 013 631**
**US-A- 3 785 209**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Stand der Technik

Die Erfindung geht aus von einem Druckgeber nach der Gattung des Anspruchs 1. Bei derartigen bekannten Druckgebern ist im Gehäuse eine Bohrung ausgebildet, in der ein Stempel angeordnet ist. Die Bohrung wird auf der einen Seite von einer Membran abgeschlossen, an der auch das eine Ende des Stempels anliegt. Das andere Ende des Stempels steht mit einem Meßelement in Wirkverbindung. Zur Druckerfassung im Brennraum von Brennkraftmaschinen werden diese Druckgeber im Zylinderkopf der Brennkraftmaschine angeordnet. Hierbei ist der Druckgeber hohen und stark wechselnden Temperaturen ausgesetzt. Die Membran kann hierbei, da sie direkt in den Brennraum hineinragt, Temperaturen bis etwa 600°C ausgesetzt sein. Im Unterschied dazu befindet sich das andere Ende des Stempels, an dem das Meßelement angeordnet ist, bei Temperaturen von ca. max. 150°C. Das Temperaturgefälle ist notwendig, um das Meßelement nicht den Temperaturen im Brennraum auzusetzen. Andererseits können bei entsprechender Umgebungstemperatur bei abgestelltem Motor auch Temperaturen bis ca. -40° erreicht werden. Im allgemeinen werden für das Gehäuse und für den Stempel unterschiedliche Werkstoffe verwendet, um das oben erwähnte Temperaturgefälle und somit eine temperaturbedingte Trennung des Meßelements von der im Brennraum herrschenden Temperatur zu gewährleisten. Andererseits verformen sich aber aufgrund der unterschiedlichen thermischen Belastungen das Gehäuse und der Stempel unterschiedlich stark. Dies bewirkt aufgrund der Steifigkeit der Membran ein Störsignal, das sich im erzeugten Meßsignal als Nullpunktsfehler bemerkbar macht und somit das Meßsignal verfälscht.

In der US-A-3,785,209 ist ein Druckgeber für Spritzgußmaschinen beschrieben, bei dem die Wärmeübertragung zwischen Gehäuse und Stempel Zeit erfordert. Um diese klein zu halten, ist der Stempel hohl und der entsprechende Gehäusespalt klein. Dabei sind Gehäuse und Stempel aus dem gleichen Material ausgeführt.

Zur Kompensation dieser unterschiedlichen thermischen Ausdehnung von Gehäuse und Stempel wird in der US-PS 5 068 635 vorgeschlagen, zwischen der Membran und dem Stempel eine Ausgleichsscheibe anzuordnen. Der thermische Ausdehnungskoeffizient dieser Ausgleichsscheibe ist hierbei auf die unterschiedliche thermische Ausdehnung von Gehäuse und Stempel abgestimmt.

Ferner wird in der EP-A-0 145 146 als Kraftübertragungsmittel, d.h. als Ersatz für den Stempel eine gut wärmeleitende, inkompressible Flüssigkeit verwendet. In der DE-OS 37 272 21 wird zur Absenkung der Temperatur des Stempels zwischen dem piezokeramischen Stempel und dem metallischen Gehäuse ein Kupferleitkleber verwendet. Dieser soll die hohe Temperatur des Stempels reduzieren, damit die Curie-Temperatur der Piezokeramik nicht überschritten wird. Alle diese Vorschläge bauen aber relativ aufwendig und kompliziert und gewährleisten trotzdem keine ausreichende Nullpunktskorrektur.

Vorteile der Erfindung

Der erfindungsgemäße Druckgeber mit den Merkmalen des Anspruchs 1 hat demgegenüber den Vorteil, daß keine thermische Null- punktsdrift mehr auftreten kann. Gleichzeitig baut der Druckgeber aber relativ einfach und preisgünstig. Es ist keine zusätzliche Wasserkühlung notwendig. Dadurch ist der Druckgeber unabhängig vom Einsatzort und der Art der thermischen Belastung verwendbar. Ist der Spalt zwischen dem Gehäuse und dem Stempel zusätzlich noch mit einem gut wärmeleitenden Medium ausgefüllt, so ist ein radialer Temperaturausgleich möglich, und die Mikroreibung zwischen dem Stempel und dem Gehäuse wird verringert, was zusätzlich auch die

Hysterese des Sensors verbessert. Die Stempelführung kann dadurch auch sehr preisgünstig gestaltet werden. Dafür, daß für Gehäuse und Stempel metallische Werkstoffe verwendet werden können, ist die Herstellung und die Bearbeitung gegenüber zum Beispiel Keramik sehr einfach. Der Druckgeber ermöglicht auch eine statische Druckmessung, wodurch weitere Steuerungs- und Regelungsfunktionen für die Brennkraftmaschine erreicht werden können.

Durch die in den Unteransprüchen aufgeführten Maßnahmen sind vorteilhafte Weiterbildungen des im Anspruch 1 angegebenen Druckgebers möglich.

Zeichnung

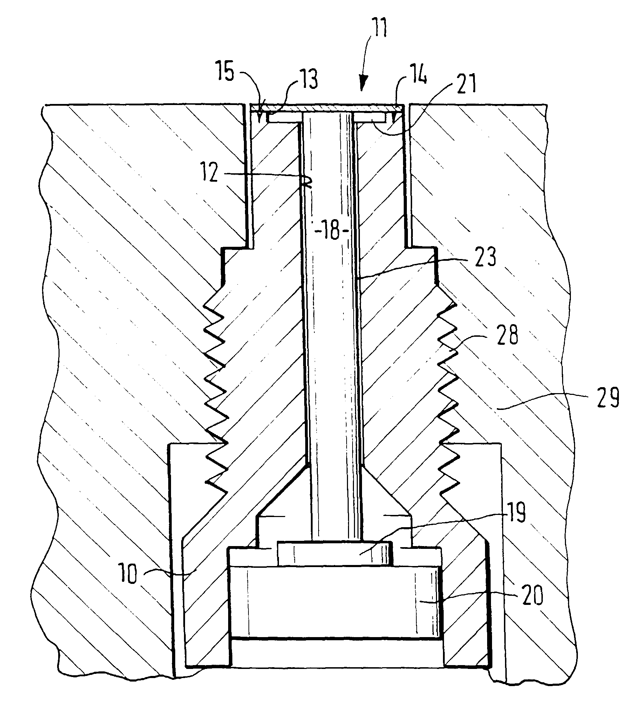

Ein Ausführungsbeispiel der Erfindung ist in der Zeichnung dargestellt und in der nachfolgenden Beschreibung näher erläutert. Die einzige Figur zeigt einen Schnitt durch einen schematisch dargestellten Druckgeber.

Beschreibung des Ausführungsbeispiels

In der Figur ist mit 10 das Gehäuse eines Druckgebers 11 zur Bestimmung des Drucks im Brennraum einer Brennkraftmaschine bezeichnet. Es weist eine mittige, durchgehende, abgesetzte Bohrung 12 auf. Die dem Brennraum zugewandte Öffnung 13 des Gehäuses 10 wird von einer Membran 14 abgeschlossen. Die Membran 14 ist im Bereich des Randes an der Stirnseite 15 des Gehäuses 10 angeschweißt. Am mittleren Bereich der Membran 14, d.h. im Biegebereich der Membran liegt ein Stempel 18 mit seinem einen Ende an, der mit seinem anderen Ende auf ein Meßelement 19 einwirkt. Als Meßelement können z.B. piezoresistive Elemente oder auch piezoelektrische Elemente verwendet werden. Unter piezoresistiven Elementen sind Elemente zu verstehen, die ihren Widerstandswert unter Druckeinwirkung ändern. Hierzu können zum Beispiel Dickschichtwiderstände verwendet werden.

Als Materialien können hierzu Cermet, Contactivplastic oder Metall etc. Verwendung finden. Das Meßelement 19 wiederum liegt an einem Gegenlager 20 an, das in die Bohrung 12 eingesetzt und mit dem Gehäuse fest verbunden ist. Auf dem Meßelement 19, oder auf dessen Träger können, in der Figur nicht dargestellt, elektrische Bauteile einer Auswerteeinrichtung aufgebracht sein. Durch nicht dargestellte Bohrungen im Gegenlager 20 können die Ableitleitungen der Auswerteschaltung oder des Meßelements 19 aus dem Gehäuse 10 des Druckgebers 11 herausgeführt und einer nicht dargestellten Auswerteschaltung und Steuereinrichtung der Brennkraftmaschine zugeführt werden. Im Bereich der Öffnung 13 ist eine Ausnehmung 21 ausgebildet, so daß die Öffnung 13 stufenförmige Gestalt hat.

Zwischen der Wand der Bohrung 12 und dem Stempel 18 befindet sich ein enger Spalt 23. Dieser Spalt 23 sollte möglichst gering gehalten sein, um eine gute Wärmeübertragung zwischen dem Gehäuse 10 und dem Stempel 18 zu ermöglichen. Um diese Wärmeübertragung ferner noch zu verbessern, kann der Spalt 23 auch mit einem gut wärmeleitenden Medium ausgefüllt sein. Dieses Medium sollte ferner auch hochtemperaturbeständig und langzeitstabil sein. Um eine weitere Verbesserung der Wärmeleitfähigkeit zu erreichen, kann die sich im Bereich der Öffnung 13 befindliche ringförmige Ausnehmung 21 zwischen dem Gehäuse 10 und der Membran 14 ebenfalls mit einem gut wärmeleitenden Medium ausgefüllt sein.

Erfindungsgemäß besteht das Gehäuse 10 und der Stempel 18, d.h. die Kraftübertragungselemente aus Werkstoffen mit gleicher thermischer Zeitkonstante. Ein wesentlicher Bestandteil der thermischen Zeitkonstante ist der Quotient aus

$$\frac{\text{Dichte x spezifische Wärmekapazität}}{\text{Wärmeleitfähigkeit}}$$

Der Quotient aus diesen drei Werkstoffkennwerten für den Werkstoff des Gehäuses 10 und für den Werkstoff des Stempels 18 soll gleich sein.

Mit Hilfe des an der Gehäuseaußenwand ausgebildeten Gewindes 28 ist der Druckgeber 11 in die Brennraumwand 29 einschraubbar. Die aus dem Brennraum in das Gehäuse 10 des Druckgebers 11 einfließende Wärme fließt zu einem großen Teil über das Gehäuse 10 den an der Wand 29 anliegenden Sensorsitz sowie die Gewindeflanken 28 in die Wand 29 des Brennraums und von dort zu einer Wärmesenke, d.h. einer Wärmeableitung. Ein kleinerer Teil des Wärmestroms fließt über die Membran 14, den Stempel 18, das Gegenlager 20, das Gehäuse 10 und im Bereich des Gewindes 28 ebenfalls in die Wand 29 und somit ebenfalls zu der oben erwähnten Wärmesenke. Um in einfacher Weise die geforderte gleiche thermische Zeitkonstante des Werkstoffs für das Gehäuse 10 und für den Stempel 18 zu erreichen, sollten die Werkstoffe jeweils aus einer Werkstofffamilie sein. Ergänzend können die Ausdehnungskoeffizienten des jeweiligen Werkstoffs für das Gehäuse und für den Stempel 18 leicht voneinander abweichen, um zum Beispiel abweichende Ausdehnungskoeffizienten für das Meßelement 10 und für das Gegenlager 20 kompensieren zu können.

Weiterhin kann der Meßeffekt auch dadurch verbessert werden, daß die Membran 14 relativ dünn ausgebildet ist und aufgrund der Ausnehmung 21 eine gute Beweglichkeit aufweist. Die Membran 14 sollte deswegen dünn ausgebildet sein, um eine geringe axiale Steifigkeit aufweisen zu können. In bekannter Weise hat ferner die Membran 14 gleichzeitig die Aufgabe einer Vorspannfeder, aufgrund der der Übertragungskraftschluß zwischen der Membran, dem Stempel und dem Meßelement vorgespannt wird.

**Patentansprüche**

1. Druckgeber (11) zur Druckerfassung im Brennraum von Brennkraftmaschinen, insbesondere von Kraftfahrzeugen, in dessen Gehäuse (10) eine Bohrung (12) ausgebildet ist, wobei in der Bohrung (12) ein Stempel (18) angeordnet ist, der mit seinem einen Ende an einer die Bohrung (12) abschließenden Membran (14) anliegt und mit seinem anderen Ende auf ein Meßelement (19) einwirkt, so daß ein dem zu bestimmenden Druck proportionales Meßsignal erzeugt wird, dadurch gekennzeichnet, daß zwischen dem Stempel (18) und dem Gehäuse (10) ein Spalt (23) vorhanden ist, und daß das Gehäuse (10) und der Stempel (18) aus unterschiedlichen Werkstoffen mit der gleichen thermischen Zeitkonstante bestehen, wobei die thermische Zeitkonstante proportional dem Quotienten aus

$$\frac{\text{Dichte x spezifische Wärmekapazität}}{\text{Wärmeleitfähigkeit}}$$

ist.

2. Druckgeber nach Anspruch 1, dadurch gekennzeichnet, daß die thermischen Ausdehnungskoeffizienten für das Material des Gehäuses (10) und für das Material des Stempels (18) gleich sind.

3. Druckgeber nach Anspruch 1, dadurch gekennzeichnet, daß die thermischen Ausdehnungskoeffizienten für das Material des Gehäuses (10) und für das Material des Stempels (18) unterschiedlich sind.

4. Druckgeber nach einem der Ansprüche 1 bis 3, dadurch gekennzeichnet, daß der Spalt (23) mit einem gut wärmeleitenden Medium ausgefüllt ist.

**5.** Druckgeber nach einem der Ansprüche 1 bis 4, dadurch gekennzeichnet, daß in der Öffnung (13) der Bohrung (12) eine Ausnehmung (21) ausgebildet ist und daß die Ausnehmung (21) mit einem gut wärmeleitenden Medium ausgefüllt ist.

**6.** Druckgeber nach Anspruch 4 oder 5, dadurch gekennzeichnet, daß das Medium hochtemperaturbetändigung und langzeitstabil ist.

## Claims

**1.** Pressure transducer (11) for recording the pressure in the combustion chamber of internal combustion engines, especially of motor vehicles, in the housing (10) of which a hole (12) is formed, the hole (12) having arranged in it a plunger (18) which, at one end, rests on a diaphragm (14) which closes off the hole (12) and, by its other end, acts on a measuring element (19), producing a measurement signal proportional to the pressure to be determined, characterized in that, and in that there is a gap (23) between the plunger (18) and the housing (10), the housing (10) and the plunger (18) are composed of different materials with the same thermal time constant, the thermal time constant being proportional to the quotient of

$$\frac{\text{density} \times \text{specific heat capacity}}{\text{thermal conductivity}}.$$

**2.** Pressure transducer according to Claim 1 characterized in that the thermal coefficients of expansion for the material of the housing (10) and for the material of the plunger (18) are the same.

**3.** Pressure transducer according to Claim 1 characterized in that the thermal coefficients of expansion for the material of the housing (10) and for the material of the plunger (18) are different.

**4.** Pressure transducer according to one of Claims 1 to 3, characterized in that the gap (23) is filled with a medium which conducts heat well.

**5.** Pressure transducer according to one of Claims 1 to 4, characterized in that a recess is formed in the opening (13) of the hole (12) and in that the recess (21) is filled with a medium which conducts heat well.

**6.** Pressure transducer according to Claim 4 or 5, characterized in that the medium is resistant to high temperatures and stable in the long term.

## Revendications

**1.** Capteur de pression (11) pour détecter la pression dans une chambre de combustion d'un moteur à combustion interne, en particulier d'un véhicule à moteur, dans le boîtier duquel (10) est constitué un alésage (12) dans lequel est disposé un poinçon (18) qui repose par l'une de ses extrémités sur une membrane (14) fermant l'alésage (12) et, par son autre extrémité, agit sur un élément de mesure (19), de telle sorte que soit produit un signal de mesure proportionnel à la pression à mesurer, caractérisé en ce que

- entre le poinçon (18) et le boîtier (10) il y a une fente(23), et
- le boîtier (10) et le poinçon (18) sont réalisés dans des matériaux différents ayant la même constante de temps thermique, la constante de temps thermique étant proportionnelle au quotient suivant :

$$\frac{\text{densité x capacité calorifique spécifique}}{\text{conductibilité thermique.}}$$

**2.** Capteur de pression, selon la revendication 1, caractérisé en ce que les coefficients thermiques de dilatation pour la matière du boîtier (10) et pour la matière du poinçon (18), sont égaux.

**3.** Capteur de pression selon la revendication 1, caractérisé en ce que les coefficients thermiques de dilatation pour la matière du boîtier (10) et pour la matière du poinçon (18), sont différents.

**4.** Capteur de pression selon l'une des revendications 1 à 3, caractérisé en ce que la fente (23) est remplie d'un agent bon conducteur de la chaleur.

**5.** Capteur de pression selon l'une des revendications 1 à 4, caractérisé en ce que

- l'on constitue dans l'orifice (13) de l'alésage (12) un évidement (21), et
- l'évidement (21) est rempli d'un agent qui conduit bien la chaleur.

**6.** Capteur de pression selon la revendication 4 ou 5, caractérisé en ce que l'agent est résistant aux températures élevées et stable sur une longue durée.